# EUROPEAN PATENT APPLICATION

(11) **EP 4 825 452 A1**
(43) Date of publication of application: **21.10.2026**
(21) Application number: 26157609.4
(22) Date of filing: 10.02.2026
(51) Int. Cl.: A62C 3/16, H01M 10/613, H01M 10/647, H01M 50/204, H01M 50/209, H01M 50/271, H01M 50/383

(54) **BATTERY MODULE**

(30) Priority: 18.04.2025 KR 20250051153
(71) Applicant: SAMSUNG SDI CO., LTD., Yongin-si, Gyeonggi-do 17084 (KR)
(72) Inventor: KIM, Giyoung, 17084 Yongin-si (KR)
(74) Representative: Marks & Clerk LLP

(57) **Abstract**

A battery module, including a plurality of battery cells, a cover part covering the plurality of battery cells, and a fire-extinguishing sheet between the plurality of battery cells and the cover part, wherein the fire-extinguishing sheet includes a first region including a first fire-extinguishing material and a second region including a second fire-extinguishing material, and the second region is within the first region.

## Description

### BACKGROUND

### 1. Field

The disclosure relates to a battery module.

### 2. Description of the Related Art

Secondary batteries are batteries that can be charged and discharged, unlike primary batteries that cannot be recharged. Low-capacity secondary batteries are used in small and portable electronic devices, such as smartphones, feature phones, laptop computers, digital cameras, and camcorders, and large-capacity secondary batteries are widely used as power sources for driving motors in hybrid cars, electric cars, or the like, and are widely used as power storage batteries. Such a secondary battery includes an electrode assembly including a positive electrode and a negative electrode, a case for accommodating the electrode assembly, and electrode terminals or the like connected to the electrode assembly.

The above-described information disclosed in the background technology of the disclosure is only intended to improve understanding of the background of the disclosure and therefore may include information that does not constitute prior art.

### SUMMARY

Embodiments include a battery module, including a plurality of battery cells, a cover part covering the plurality of battery cells, and a fire-extinguishing sheet between the plurality of battery cells and the cover part, wherein the fire-extinguishing sheet includes a first region including a first fire-extinguishing material and a second region including a second fire-extinguishing material, and the second region is within the first region.

The first region and the second region may be in a same layer.

A ratio of a weight of the first fire-extinguishing material to a weight of the second fire-extinguishing material may be about 4 to about 10.

A thickness of the fire-extinguishing sheet may be about 2 mm to about 9 mm.

A thickness of the first region may be a same thickness as a thickness of the second region.

The second region may include a plurality of sub-fire-extinguishing units spaced apart from each other, and the plurality of sub-fire-extinguishing units may be positioned to respectively overlap vents.

The first region may include grooves recessed in a thickness direction, and the plurality of sub-fire-extinguishing units are respectively within the grooves.

The battery module may further include a third region within the second region, the third region including the first fire-extinguishing material.

The fire-extinguishing sheet may include a plurality of fire-extinguishing sheets spaced apart from each other, the plurality of fire-extinguishing sheets respectively corresponding to the plurality of battery cells.

The fire-extinguishing sheet may be coupled to the cover part.

Embodiments include a battery module, including a plurality of battery cells, a cover part covering the plurality of battery cells, and a fire-extinguishing sheet between the plurality of battery cells and the cover part, wherein the fire-extinguishing sheet includes a first region including a first fire-extinguishing material and a second region including a second fire-extinguishing material, and a ratio of a weight of the first fire-extinguishing material to a weight of the second fire-extinguishing material is about 4 to about 10.

The second region may be within the first region.

The battery module may further include a third region within the second region, the third region including the first fire-extinguishing material.

The fire-extinguishing sheet includes a plurality of fire-extinguishing sheets spaced apart from each other, the plurality of fire-extinguishing sheets respectively corresponding to the plurality of battery cells.

A thickness of the first region may be a same thickness as a thickness of the second region.

A thickness of the fire-extinguishing sheet may be about 2 mm to about 9 mm.

The first region and the second region may be in a same layer.

The second region may include a plurality of sub-fire-extinguishing units spaced apart from each other, and the plurality of sub-fire-extinguishing units may respectively overlap vents of the plurality of battery cells.

The first region may include grooves recessed in a thickness direction, and the plurality of sub-fire-extinguishing units may respectively be within the grooves.

The first fire-extinguishing material may include a fire-extinguishing material that is a cooling fire-extinguishing material, and the second fire-extinguishing material may include a fire-extinguishing material that fire-extinguishes by smothering.

At least some of the above and other features of the invention are set out in the claims.

### BRIEF DESCRIPTION OF THE DRAWINGS

Features will become apparent to those of ordinary skill in the art by describing in detail example embodiments with reference to the attached drawings, in which:
FIG. 1 is an exploded perspective view schematically illustrating an example of a battery module according to an embodiment;
FIG. 2 is a perspective view schematically illustrating an example of a battery cell of the battery module of FIG. 1;
FIG. 3 is a cross-sectional view schematically illustrating an example of a cross-section of the battery cell of FIG. 2, taken along a line B-B' in FIG. 2;
FIG. 4 is an exploded perspective view schematically illustrating an example of a battery module according to another embodiment;
FIG. 5 is a cross-sectional view schematically illustrating an example of a cross-section of the battery module of FIG. 4, taken along a line A-A' in FIG. 4;
FIG. 6 is a cross-sectional view schematically illustrating another example of the cross-section of the battery module of FIG. 4, taken along the line A-A' in FIG. 4; and
FIG. 7 is an exploded perspective view schematically illustrating an example of a fire-extinguishing sheet according to another embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Terms or words used in this specification and claims should not be interpreted as limited to their usual or dictionary meanings, and should be interpreted as meanings and concepts that conform to the technical idea of the disclosure based on the principle that the inventor can appropriately define the concept of the term to explain his or her own disclosure in the best way. Therefore, the embodiments described in this specification and the configurations illustrated in the drawings are only some of the most preferred embodiments of the disclosure and do not represent all of the technical ideas of the disclosure, and it should be understood that there may be various equivalents and modified examples that can replace them at the time of filing this application.

In addition, it should be understood that terms such as "include" or "comprise" and/or "including" or "comprising" used herein are intended to specify the presence of stated shapes, numbers, steps, operations, parts, elements, and/or groups thereof, but do not preclude the presence or addition of one or more other shapes, numbers, operations, parts, elements, and/or groups thereof.

Although the terms first, second, etc. are used to describe various components, these components are not limited by these terms. These terms are only used to distinguish one component from another, and unless otherwise stated, it is of course the case that a first component may also be a second component.

Throughout the specification, unless otherwise specifically stated, each component may be singular or plural.

Any configuration being disposed on "an upper portion (or a lower portion)" of a component or "on (or below)" a component may mean not only that the any configuration is disposed in contact with the upper surface (or lower surface) of the component, but also that other configurations may be interposed between the component and the any configuration disposed on (or below) the component.

In addition, when it is described that a component is "linked," "coupled," or "connected" to another component, it should be understood that the components may be directly linked or connected to each other, but that other components may also be "interposed" between the components, or that each component may be "linked," "coupled," or "connected" through other components. Also, when it is said that a part is electrically coupled to another part, this includes not only cases where they are directly connected, but also cases where they are connected with another element in between.

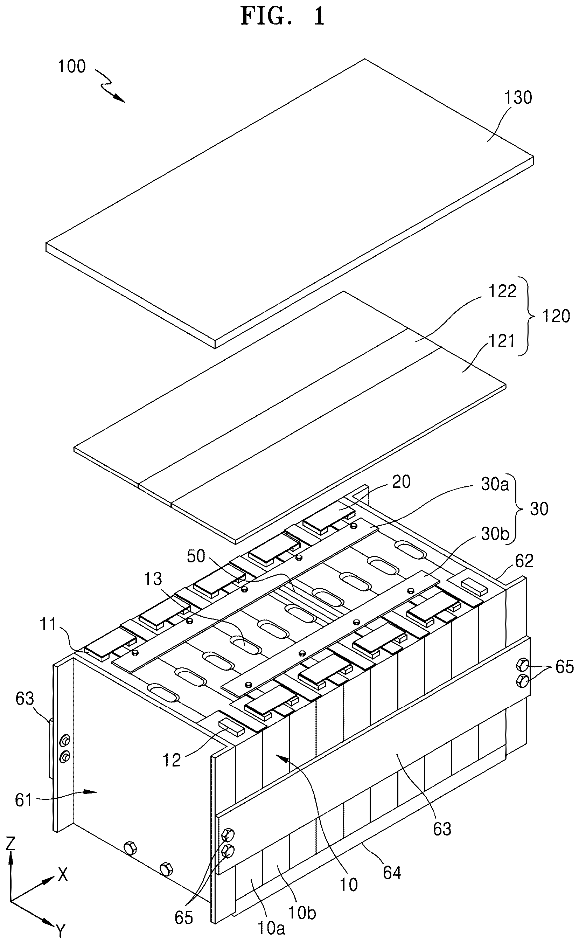

FIG. 1 is an exploded perspective view schematically illustrating an example of a battery module according to an embodiment.

Referring to FIG. 1, a battery module 100 according to an embodiment has terminal parts 11 and 12 including a first terminal 11 and a second terminal 12, and includes a plurality of battery cells 10 arranged in one direction (the X-axis direction), a connection tab 20 connecting any one battery cell 10a to another battery cell 10b adjacent thereto, and a protection circuit module 30 having one side end connected to the connection tab 20.

The protection circuit module 30 may be a battery management system (BMS). In some embodiments, the connection tab 20 includes a body part that contacts the terminal parts 11 and 12 between adjacent battery cells 10a and 10b, and an extension part that extends from the body part and is connected to the protection circuit module 30. The connection tab 20 may be a bus bar.

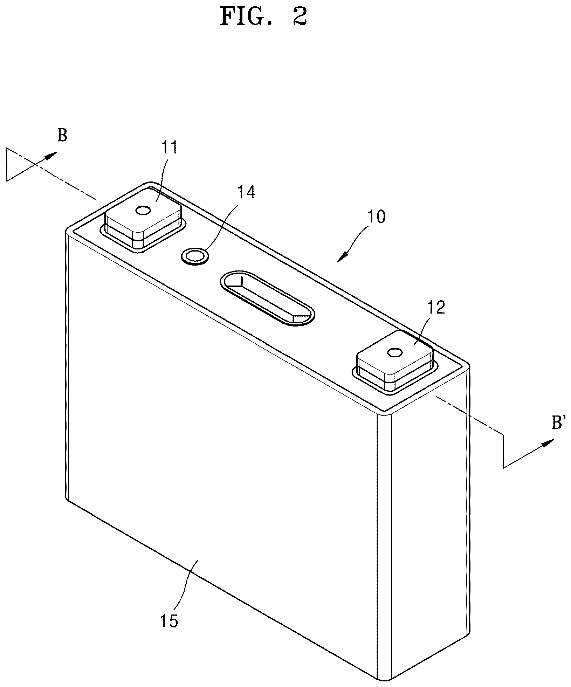

First, a battery cell 10 may include a battery case 15 (see FIG. 2), and an electrode assembly and an electrolyte, which are accommodated within the battery case 15. The electrode assembly and the electrolyte react electrochemically to generate energy.

One side of the battery cell 10 may be provided with the terminal parts 11 and 12, which are electrically connected to the connection tab 20, and a vent 13 which is a discharge passage for gas generated internally. The terminal parts 11 and 12 of the battery cell 10 may be the first terminal 11 and the second terminal 12, which have different polarities. For example, in case that the first terminal 11 is a positive terminal, the second terminal 12 may be a negative terminal, and conversely, in case that the first terminal 11 is a negative terminal, the second terminal 12 may be a positive terminal. That is, the first terminal 11 and the second terminal 12 are formed with different electrical polarities that may vary.

The terminal parts 11 and 12 of adjacent battery cells 10 may be electrically connected in series and/or in parallel by the connection tab 20. For example, a first terminal 11 of any one battery cell 10 may be electrically connected to a second terminal 12 of another adjacent battery cell 10 through the connection tab 20, and a second terminal 12 of the one battery cell 10 may be electrically connected to a first terminal 11 of another adjacent battery cell 10 through another connection tab 20.

Although FIG. 1 illustrates a serial connection as an example, various connection structures may be adopted as needed. In some embodiments, the number and arrangement of battery cells illustrated in FIG. 1 may be changed as needed.

The plurality of battery cells 10 may be arranged in one direction (the X-axis direction) so that wide surfaces of the battery cells 10 face each other, and the arranged battery cells 10 may be fixed by housings 61, 62, 63, and 64.

The housings 61, 62, 63, and 64 may include a pair of end plates 61 and 62 facing the wide surfaces of the battery cells 10, side plates 63 connecting the pair of end plates 61 and 62, and a bottom plate 64.

The side plates 63 may support the side surfaces of the battery cells 10, and the bottom plate 64 may support bottom surfaces of the battery cells 10. In some embodiments, the pair of end plates 61 and 62, the side plates 63, and the bottom plate 64 may be connected by a member such as a bolt 65.

The protection circuit module 30 may mount electronic components and a protection circuit or the like, and may be electrically connected to the connection tab 20 to be described below.

The protection circuit module 30 may include a first protection circuit module 30a and a second protection circuit module 30b, which extend from different positions in the one direction (the X-axis direction) in which the plurality of battery cells 10 are arranged, and at this time, the first protection circuit module 30a and the second protection circuit module 30b may be spaced apart from each other by a certain distance but may be positioned in parallel to each other to be electrically connected to adjacent connection tabs 20.

For example, the first protection circuit module 30a may be formed to extend on one side of upper portions of the plurality of battery cells 10 in the one direction (the X-axis direction) in which the plurality of battery cells 10 are arranged, and the second protection circuit module 30b may be formed to extend on another side of the upper portions of the plurality of battery cells 10 in the one (the X-axis) direction in which the plurality of battery cells 10 are arranged, but the second protection circuit module 30b may be positioned to be spaced apart from the first protection circuit module 30a by a certain distance with the vent 13 therebetween, but may be disposed in parallel to the first protection circuit module 30a.

In this way, the two protection circuit modules 30 are disposed to be spaced apart from each other and in parallel to each other in the one (X-axis) direction in which the plurality of battery cells 10 are arranged, thereby reducing an area of a printed circuit board (PCB) configuring the protection circuit module 30. The protection circuit module 30 is configured separately as two protection circuit modules (i.e., the first and second protection circuit modules 30a and 30b) to reduce unnecessary PCM area.

In some embodiments, the first protection circuit module 30a and the second protection circuit module 30b may be connected to each other by a conductive connection member 50. At this time, one side of the connection member 50 may be connected to the first protection circuit module 30a, and another side thereof may be connected to the second protection circuit module 30b, so that an electrical connection may be made between the two protection circuit modules (i.e., the first and second protection circuit modules 30a and 30b).

The above connection may be made by any one of soldering, resistance welding, laser welding, or projection welding methods.

The connection member 50 may include an elastic or flexible material. By such a connection member 50, the voltage, temperature, and current of the plurality of battery cells 10 may be checked and managed to ensure that the voltage, temperature, and current thereof are normal.

That is, information, such as a voltage, current, and temperature received by the first protection circuit module 30a from its adjacent connection tabs 20 and information, such as a voltage, current, and temperature received by the second protection circuit module 30b from its adjacent connection tabs 20 may be integrated and managed by the protection circuit module 30 through the connection member 50.

In some embodiments, in case that a battery cell 10 swells, shock may be absorbed by the elasticity or flexibility of the connection member 50, thereby preventing the first and second protection circuit modules 30a and 30b from being damaged.

The shape and structure of the connection member 50 may vary from the shape shown in FIG. 1.

In this way, as the protection circuit module 30 is provided with the first and second protection circuit modules 30a and 30b, the area of the PCB configuring the protection circuit module 30 may be reduced, and thus a space inside the battery module 100 may be secured. This may not only improve a fastening operation of connecting the connection tab 20 to the protection circuit module 30, but may also improve operation efficiency by facilitating repairs when an abnormality is detected in the battery module 100.

The battery module 100 may further include a cover part 130 covering the plurality of battery cells 10 and a fire-extinguishing sheet 120 positioned between the plurality of battery cells 10 and the cover part 130.

The cover part 130 may be coupled to the housings 61, 62, 63, and 64 by a fastening member such as a bolt, but any method that may be used for fastening is possible. The cover part 130 may be coupled to the housings 61, 62, 63, and 64 to form an internal space, and the plurality of battery cells 10 and the fire-extinguishing sheet 120 may be accommodated in the internal space. Accordingly, the materials of the cover part 130 and the housings 61, 62, 63, and 64 need to be materials that may protect the plurality of battery cells 10 and the fire-extinguishing sheet 120 from mechanical shock or thermal shock.

Therefore, the materials of the cover part 130 and the housings 61, 62, 63, and 64 may include, for example, materials having excellent durability and thermal resistance, for example, any one of acrylonitrile butadiene styrene (ABS), polycarbonate (PC), polypropylene (PP), aluminum, or stainless steel.

The fire-extinguishing sheet 120 may include a first region 121 including a first fire-extinguishing material that is released at a certain temperature or higher and cools and extinguishes the battery cells 10, and a second region 122 including a second fire-extinguishing material that is released at a certain temperature or higher and smothers and extinguishes the battery cells 10. In some embodiments, the second region 122 may be positioned within the first region 121.

As the temperature of any one battery cell 10 increases, a protective layer (SEI layer) (e.g., solid electrolyte interphase layer) of a negative electrode of the battery cell 10 may be decomposed and destroyed, and accordingly, the electrolyte inside the battery cell 10 may be thermally decomposed, and flammable gas may be generated. In some embodiments, oxygen may be generated due to the decomposition of oxide at a positive electrode in the battery cell 10. As a result, all three elements of fire, that is, heat, fuel (flammable gas), and oxygen, are generated, which may cause a thermal runaway in the battery cell 10. In some embodiments, when a thermal runaway occurs in a battery cell 10, the thermal runaway may be spread to other adjacent battery cells 10 due to heat generation and explosion.

In an embodiment, in case that the fire-extinguishing sheet 120 includes both the first region 121 including the first fire-extinguishing material that cools and extinguishes the battery cell 10 and the second region 122 including the second fire-extinguishing material that smothers and extinguishes the battery cell 10, when the temperature of any one battery cell 10 increases, the battery cell 10 may be cooled and oxygen around the battery cell 10 may be blocked at the same time, thereby effectively preventing a thermal runaway of the battery cell 10 and the spread of the thermal runaway.

The first fire-extinguishing material that performs cooling fire-extinguishment may have a boiling point lower than a temperature at which a thermal runaway of the battery cell 10 occurs. Accordingly, when the temperature of the battery cell 10 increases, the first fire-extinguishing material may absorb heat as latent heat of vaporization to cool the battery cell 10, thereby preventing a thermal runaway in advance. For example, the first fire-extinguishing material may include halogenated carbon, and any material may be possible as long as the boiling point of the first fire-extinguishing material is lower than the thermal runaway temperature of the battery cell 10 and the first fire-extinguishing material may absorb heat as latent heat of vaporization to cool the battery cell 10 of which the temperature has increased.

The second fire-extinguishing material may include a material that performs smothering fire-extinguishment by suppressing fire by blocking oxygen. Accordingly, in case that a thermal runaway of a battery cell 10 occurs, oxygen around the battery cell 10 may be blocked to prevent the thermal runaway from spreading to other adjacent battery cells 10. For example, the second fire-extinguishing material may include at least one of potassium, a solid aerosol, nitrogen, argon, or carbon dioxide, but this may vary.

The boiling point of the first fire-extinguishing material may be lower than that of the second fire-extinguishing material, and accordingly, an operating temperature of the second region 122 including the second fire-extinguishing material may be higher than an operating temperature of the first region 121 including the first fire-extinguishing material. Therefore, the vents 13 of the battery cells 10, from which heat and high-temperature gas are mainly released during the thermal runaway of the battery cell 10, and the second region 122, may be disposed to overlap each other. That is, the second region 122 may be positioned within the first region 121 to overlap the vents 13 of the battery cells 10, and the first region 121 may be positioned around the second region 122.

As a result, as the temperature of the battery cell 10 increases, when heat and high-temperature gas are released from the vent 13, the second region 122 is activated due to the high temperature of the heat and high-temperature gas and releases the second fire-extinguishing material to smother and extinguish the battery cell 10. In some embodiments, with the first region 121 positioned around the second region 122, the first fire-extinguishing material may be released to cool the battery cell 10 to prevent an additional thermal runaway.

The first region 121 and the second region 122 may be positioned in the same layer. Accordingly, as described above, when the temperature of the battery cell 10 increases, both the first region 121 and the second region 122 of the fire-extinguishing sheet 120 may be activated to release the first fire-extinguishing material and the second fire-extinguishing material. Accordingly, the fire-extinguishing sheet 120 may effectively prevent the thermal runaway of the battery cell 10 by simultaneously performing cooling fire-extinguishment and smothering fire-extinguishment.

In case that the first region 121 is disposed below the second region 122, when the temperature of the battery cell 10 increases, the second region 122 may not operate until the first region 121 is fully operated. In this case, in case that the cooling fire-extinguishment of the first region 121 is insufficient and a thermal runaway of the battery cell 10 occurs, the fire-extinguishing sheet 120 may not smother and extinguish the battery cell 10 but may only cool and extinguish the battery cell 10, so there is a risk that the thermal runaway may be spread to other adjacent battery cells 10.

In some embodiments, in case that (e.g., if) the second region 122 is disposed below the first region 121, when the temperature of the battery cell 10 increases, the first region 121 may not operate until the second region 122 is fully operated. As a result, the cooling fire-extinguishment on the battery cell 10 is not performed, which may cause an additional thermal runaway in the battery cell 10 and other adjacent battery cells 10.

A fire-extinguishing ability of the second fire-extinguishing material performing smothering fire-extinguishment may be higher than a fire-extinguishing ability of the first fire-extinguishing material performing cooling fire-extinguishment. Therefore, a ratio of a weight of the first fire-extinguishing material to a weight of the second fire-extinguishing material may be about 4 to about 10.

In case that the ratio of the weight of the first fire-extinguishing material to the weight of the second fire-extinguishing material is less than 4, the fire-extinguishing sheet 120 may not sufficiently perform cooling fire-extinguishment on the battery cell 10. Accordingly, the battery cell 10 whose temperature has increased may not be sufficiently cooled, which may cause a thermal runaway in the battery cell 10. In some embodiments, in case that the ratio of the weight of the first fire-extinguishing material to the weight of the second fire-extinguishing material is greater than 10, the fire-extinguishing sheet 120 may not sufficiently perform smothering fire-extinguishment on the battery cell 10. As a result, there is a risk that the thermal runaway may be spread to surrounding battery cells 10 adjacent to the battery cell 10 in which the thermal runaway has occurred.

A thickness of the fire-extinguishing sheet 120 may be about 2 mm to about 9 mm. In case that the thickness of the fire-extinguishing sheet 120 is less than 2 mm, an amount of fire-extinguishing materials contained in the fire-extinguishing sheet 120 may be small, so a fire-extinguishing effect on the battery module 100 may be insufficient. In some embodiments, in case that the thickness of the fire-extinguishing sheet 120 exceeds 9 mm, a degree of integration of the battery module 100 may decrease, and a manufacturing cost of the fire-extinguishing sheet 120 may increase.

The fire-extinguishing sheet 120 may be coupled to the cover part 130 on a lower surface of the cover part 130. In case that the fire-extinguishing sheet 120 is coupled to the cover part 130, the degree of integration of the battery module 100 may be improved. However, as another example, the fire-extinguishing sheet 120 may also be a separate sheet provided between the plurality of battery cells 10 and the cover part 130.

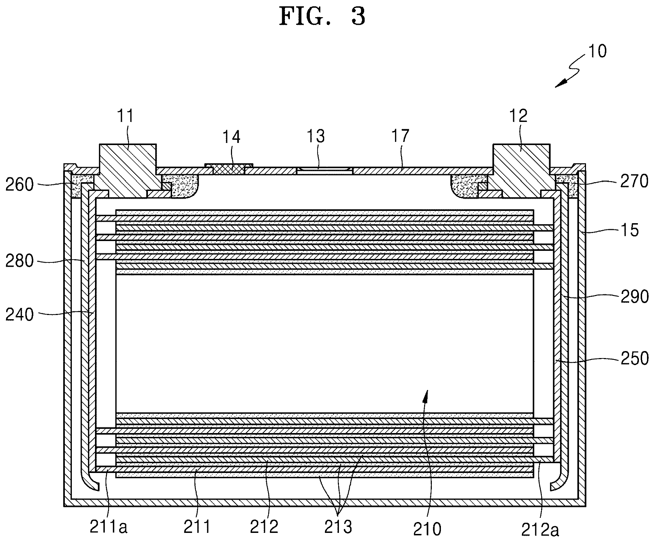

FIG. 2 is a perspective view schematically illustrating an example of a battery cell of the battery module of FIG. 1, and FIG. 3 is a cross-sectional view schematically illustrating an example of a cross-section of the battery cell of FIG. 2, taken along a line B-B' in FIG. 2.

Referring to FIGS. 2 and 3 together, a battery cell 10 according to an embodiment may include at least one or more electrode assemblies 210 wound between a positive electrode 211 and a negative electrode 212 with a separator 213 as an insulator interposed between the positive electrode 211 and the negative electrode 212, and a case 15 into which the electrode assembly 210 is built (e.g., is accommodated).

The battery cell 10 according to an embodiment is described as having an angular shape as an example. However, the disclosure may be applied to various types of battery cells, such as pouch or cylindrical battery cells.

The positive electrode 211 and the negative electrode 212 may each include a coated part, which is an area where an active material is applied to a current collector including a metal foil of a thin plate, and may respectively include non-coated parts 211a and 212a, which are areas where the active material is not coated.

The positive electrode 211 and the negative electrode 212 are wound with the separator 213, which is an insulator, interposed therebetween. However, the electrode assembly 210 described above may be formed in a structure in which a positive electrode and a negative electrode, which include a plurality of sheets, are alternately stacked with a separator therebetween.

The case 15 may form the overall exterior of the battery cell 10 and may include a conductive metal, such as aluminum, an aluminum alloy, or nickel-plated steel. In some embodiments, the case 15 may provide a space in which the electrode assembly 210 is accommodated.

The battery cell 10 may include a cap plate 17 covering an opening of the case 15, and the case 15 and the cap plate 17 may each include a conductive material. Here, the first terminal 11 and the second terminal 12, which are electrically connected to the positive electrode 211 or the negative electrode 212, may be installed to protrude outwardly by penetrating the cap plate 17.

In some embodiments, outer surfaces of upper pillars of the first terminal 11 and the second terminal 12, which protrude outward from the cap plate 17, may be threaded and fixed to the cap plate 17 with a nut.

However, the first terminal 11 and the second terminal 12 may be formed in a rivet structure to be rivetedly coupled to each other, or may also be welded to the cap plate 17.

In some embodiments, the cap plate 17 may include a thin plate and may be coupled to the opening of the case 15, and an electrolyte injection port 14 into which a sealing plug may be installed may be formed in the cap plate 17, and the vent 13 having a notch may be installed in the cap plate 17.

The first terminal 11 and the second terminal 12 may be electrically connected to current collectors including first and second current collectors 240 and 250 (hereinafter referred to as positive and negative current collectors) welded to a positive non-coated part 211a or a negative non-coated part 212a.

For example, the first terminal 11 and the second terminal 12 may be coupled to the positive and negative current collectors 240 and 250 by welding, respectively. However, the first terminal 11, the second terminal 12, and the positive and negative current collectors 240 and 250 may also be integrally formed by being coupled as an integral (e.g., monolithic) body.

In some embodiments, an insulating member may be installed between the electrode assembly 210 and the cap plate 17. Here, the insulating member may include first and second lower insulating members 260 and 270, and each of the first and second lower insulating members 260 and 270 may be installed between the electrode assembly 210 and the cap plate 17.

In some embodiments, one end of a separating member that may be installed facing one side surface of the electrode assembly 210 may be installed between the insulating member and the first terminal 11 and the second terminal 12.

Here, the separating member may include first and second separating members 280 and 290.

Accordingly, one end of each of the first and second separating members 280 and 290 that may be installed facing one side surface of the electrode assembly 210 may be installed between the first and second lower insulating members 260 and 270 and the first terminal 11 and the second terminal 12.

As a result, the first terminal 11 and the second terminal 12, which are welded and coupled to the positive and negative current collectors 240 and 250, may be coupled to the first and second lower insulating members 260 and 270 and one end of each of the first and second separating members 280 and 290, respectively.

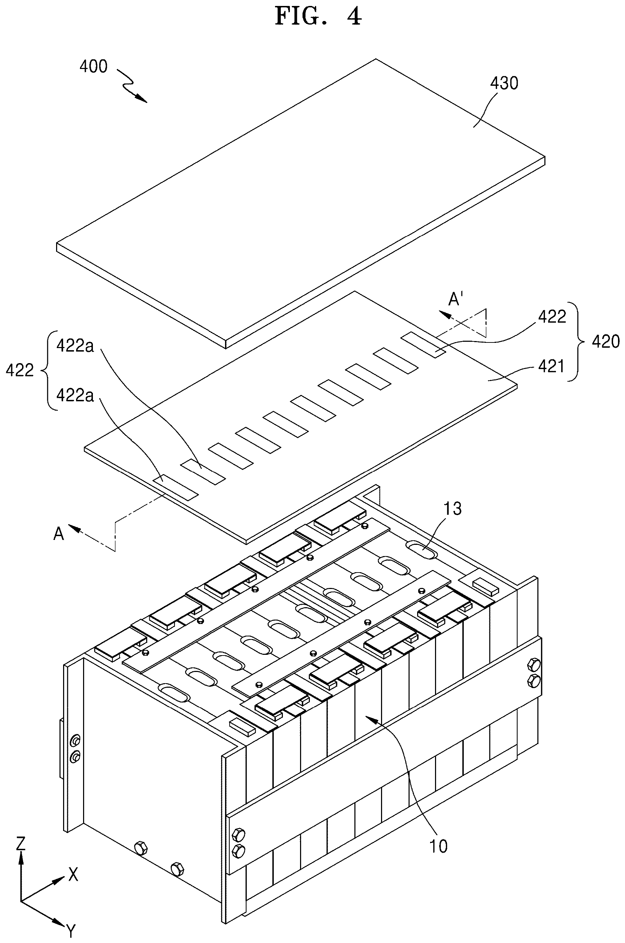

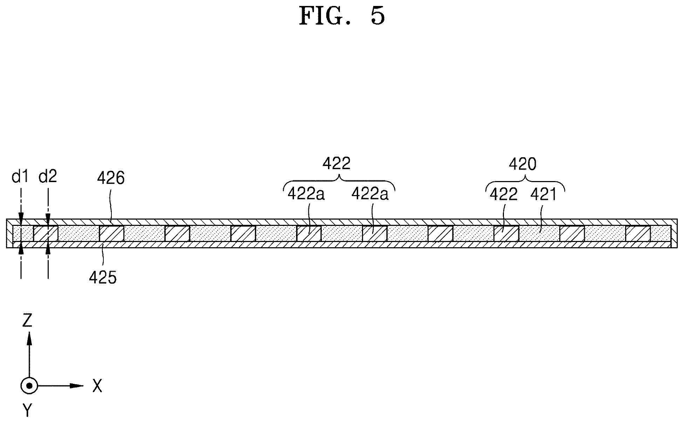

FIG. 4 is an exploded perspective view schematically illustrating an example of a battery module according to another embodiment, and FIG. 5 is a cross-sectional view schematically illustrating an example of a cross-section of the battery module of FIG. 4, taken along a line A-A' in FIG. 4.

Referring to FIGS. 4 and 5, a battery module 400 according to another embodiment may include a plurality of battery cells 10 arranged in the one (X-axis) direction, a cover part 430 covering the plurality of battery cells 10, and a fire-extinguishing sheet 420 positioned between the plurality of battery cells 10 and the cover part 430.

The fire-extinguishing sheet 420 may include a first region 421 including a first fire-extinguishing material that is released at a certain temperature or higher and cools and extinguishes the battery cells 10, and a second region 422 including a second fire-extinguishing material that is released at a certain temperature or higher and smothers and extinguishes the battery cells 10. The second region 422 may be positioned within the first region 421, the second region 422 may include a plurality of sub-fire-extinguishing units 422a spaced apart from each other, and the plurality of sub-fire-extinguishing units 422a may be positioned to overlap the vents 13 of the battery cells 10, respectively.

When the temperature of the battery cell 10 increases, high-temperature gas and flames may be released from the vent 13. In this case, the plurality of sub-fire-extinguishing units 422a performing smothering fire-extinguishment may be positioned to respectively overlap the vents 13 to suppress fire and prevent a thermal runaway from spreading to other adjacent battery cells 10. In some embodiments, the first region 421 positioned around the sub-fire-extinguishing units 422a may cool the battery cell 10 to prevent the temperature of other adjacent battery cells 10 from increasing and causing a thermal runaway.

The fire-extinguishing sheet 420 may further include a first sheet cover 425 and a second sheet cover 426. In some embodiments, a thickness d1 of the first region 421 may be the same as a thickness d2 of the second region 422.

When manufacturing the fire-extinguishing sheet 420, the first region 421 may be disposed on the first sheet cover 425. At this time, the first region 421 may include holes corresponding to the positions where the sub-fire-extinguishing units 422a are to be disposed in the one (X-axis) direction. The sub-fire-extinguishing units 422a may be respectively disposed in the holes. After the first region 421 and the sub-fire-extinguishing units 422a are disposed on the first sheet cover 425, the second sheet cover 426 may cover the first region 421 and the sub-fire-extinguishing units 422a. As a result, the first sheet cover 425 and the second sheet cover 426 may be coupled to each other to seal the fire-extinguishing sheet 420.

In case that the thickness d1 of the first region 421 is the same as the thickness d2 of the second region 422, the first region 421 and the second region 422, which are disposed between the first sheet cover 425 and the second sheet cover 426, may form a dense structure with almost no empty space, and accordingly, the first region 421 and the second region 422 may be well fixed without flowing inside the fire-extinguishing sheet 420. In some embodiments, in case that the thickness d1 of the first region 421 is the same as the thickness d2 of the second region 422, the convenience of a manufacturing process of the fire-extinguishing sheet 420 may be improved.

The fire-extinguishing sheet 120 illustrated and described in FIG. 1 may also be sealed through a first sheet cover and a second sheet cover, and the thicknesses of the first region 121 and the second region 122 may be the same.

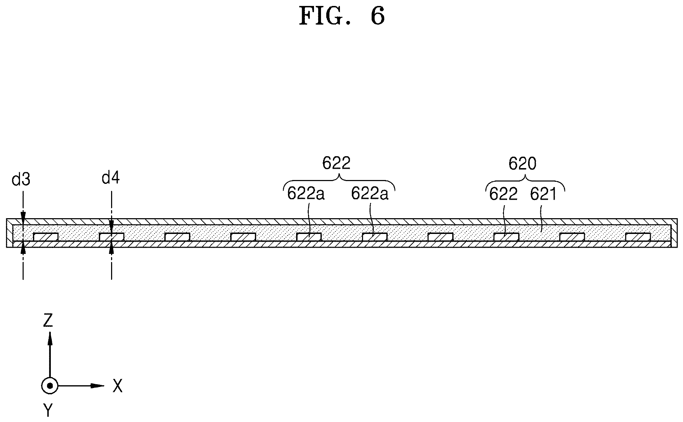

FIG. 6 is a cross-sectional view schematically illustrating another example of the cross-section of the battery module of FIG. 4, taken along the line A-A' in FIG. 4.

Referring to FIGS. 4 and 6, a fire-extinguishing sheet 620 according to another embodiment may include a first region 621 including a first fire-extinguishing material that is released at a certain temperature or higher and cools and extinguishes the battery cells 10, and a second region 622 including a second fire-extinguishing material that is released at a certain temperature or higher and smothers and extinguishes the battery cells 10. The second region 622 may be positioned within the first region 621, the second region 622 may include a plurality of sub-fire-extinguishing units 622a spaced apart from each other, and the plurality of sub-fire-extinguishing units 622a may be positioned to overlap the vents 13 of the battery cells 10, respectively.

In some embodiments, the first region 621 may include grooves recessed in a thickness direction (Z-axis direction), and the plurality of sub-fire-extinguishing units 622a may be respectively disposed within the grooves. In this case, a thickness d3 of the first region 621 may be greater than a thickness d4 of the second region 622.

When the temperature of the battery cell 10 increases, high-temperature gas and flames may be released from the vent 13. In this case, the plurality of sub-fire-extinguishing units 622a performing smothering fire-extinguishment may be positioned to respectively overlap the vents 13 to suppress fire and prevent a thermal runaway from spreading to other adjacent battery cells 10. At the same time, the first region 621 positioned around the sub-fire-extinguishing units 622a may cool the battery cell 10 to prevent the temperature of other adjacent battery cells 10 from increasing and causing a thermal runaway.

A fire-extinguishing ability of the second fire-extinguishing material performing smothering fire-extinguishment may be higher than a fire-extinguishing ability of the first fire-extinguishing material performing cooling fire-extinguishment. In some embodiments, a manufacturing cost of the second fire-extinguishing material may be higher than a manufacturing cost of the first fire-extinguishing material.

Even when a thickness of the second region 622 is less than that of the first region 621, the second region 622 may perform fire-extinguishment at a similar level as the first region 621 due to the excellent fire-extinguishing ability of the second fire-extinguishing material. Accordingly, in case that the thickness d4 of the second region 622 is less than the thickness d3 of the first region 621, a total amount of the second fire-extinguishing materials is reduced, so that a material cost of the fire-extinguishing sheet 620 may be reduced.

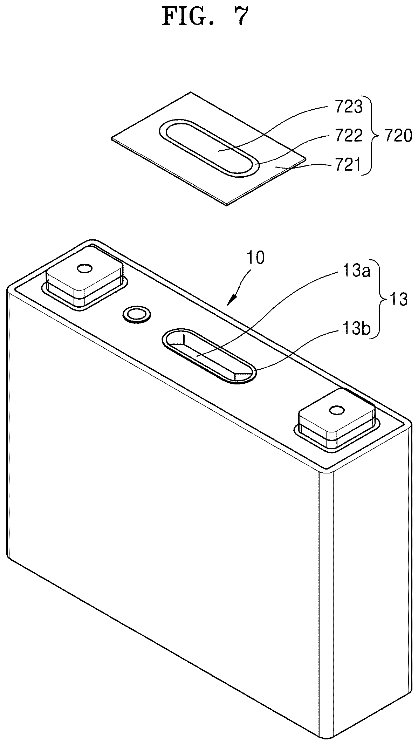

FIG. 7 is an exploded perspective view schematically illustrating an example of a fire-extinguishing sheet according to another embodiment.

Referring to FIG. 7, a fire-extinguishing sheet 720 according to another embodiment may include a plurality of fire-extinguishing sheets 720 spaced apart from each other, and the plurality of fire-extinguishing sheets 720 may be disposed on a plurality of battery cells 10 to respectively correspond to the plurality of battery cells 10. That is, the fire-extinguishing sheet 720 may be the plurality of fire-extinguishing sheets 720 respectively covering the plurality of battery cells 10, instead of a single fire-extinguishing sheet that covers all of the battery cells 10.

In case that the fire-extinguishing sheet 720 includes the plurality of fire-extinguishing sheets 720 spaced apart from each other, a fire-extinguishing sheet 720 positioned far from a fire-extinguishing sheet 720 disposed on the battery cell 10 where a thermal runaway has occurred may not operate and thus may be reused, thereby reducing material costs. For example, in case that a thermal runaway occurs in a battery cell 10, the fire-extinguishing sheet 720 positioned on an upper portion of the battery cell 10 may be activated. The fire-extinguishing sheet 720 may suppress the thermal runaway of the battery cell 10 by releasing the first fire-extinguishing material and the second fire-extinguishing material. In such a case, the fire-extinguishing sheet 720 disposed on another battery cell 10 which is far away from the battery cell 10 where the thermal runaway has occurred may not operate and may be reused.

The fire-extinguishing sheet 720 may include a first region 721 including a first fire-extinguishing material and a second region 722 including a second fire-extinguishing material, and the second region 722 may be positioned within the first region 721. In some embodiments, the fire-extinguishing sheet 720 may further include a third region 723 positioned within the second region 722 and including the first fire-extinguishing material. The second region 722 may be disposed at a position corresponding to an exterior 13b of the vent 13, and the third region 723 may be disposed at a position corresponding to a center 13a of the vent 13.

When the temperature of the battery cell 10 increases, high-temperature gas and heat may be released from the vent 13. In this case, the third region 723 corresponding to the center 13a of the vent 13 and including the first fire-extinguishing material having a lower operating temperature than the second fire-extinguishing material may operate first to cool the vent 13. In case that the emission of high-temperature gas and heat from the vent 13 continues despite the cooling of the third region 723, the second region 722 disposed at a position corresponding to the exterior 13b of the vent 13 may be activated to suppress fire by performing smothering fire-extinguishment on the battery cell 10. In some embodiments, at the same time, the first region 721 disposed outside the second region 722 may cool the battery cell 10 whose temperature has increased to prevent the temperature of the surrounding battery cells 10 from rising and causing an additional thermal runaway.

As illustrated in FIG. 7, the shape of the second region 722 does not need to be circular, and any shape is possible as long as the third region 723 may be disposed inside the second region 722.

According to embodiments, a fire-extinguishing sheet of a battery module may include a first region including a first fire-extinguishing material that performs cooling fire-extinguishment and a second region including a second fire-extinguishing material that performs smothering fire-extinguishment, and the first region and the second region are positioned in the same layer, so that when a thermal runaway occurs in any one battery cell, the battery module is extinguished at an early stage, and the thermal runaway is prevented from spreading to the entire battery module, thereby improving the stability of the battery module.

However, effects obtainable through the disclosure are not limited to the effects described above, and other technical effects not mentioned will be clearly understood by those skilled in the art from the description of the disclosure described above.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery module, comprising:
a plurality of battery cells;
a cover part covering the plurality of battery cells; and
a fire-extinguishing sheet between the plurality of battery cells and the cover part,
wherein:
the fire-extinguishing sheet includes a first region including a first fire-extinguishing material and a second region including a second fire-extinguishing material, and
the second region is within the first region.

2. The battery module as claimed in claim 1, wherein the first region and the second region are in the same layer.

3. The battery module as claimed in claim 1 or 2, wherein a ratio of a weight of the first fire-extinguishing material to a weight of the second fire-extinguishing material is about 4 to about 10.

4. The battery module as claimed in claim 1, 2 or 3, wherein a thickness of the fire-extinguishing sheet is about 2 mm to about 9 mm.

5. The battery module as claimed in preceding claim, wherein a thickness of the first region is the same thickness as a thickness of the second region.

6. The battery module as claimed in any preceding claim, wherein:
the second region includes a plurality of sub-fire-extinguishing units spaced apart from each other, and
the plurality of sub-fire-extinguishing units are positioned to respectively overlap vents.

7. The battery module as claimed in claim 6, wherein the first region includes grooves recessed in a thickness direction, and
the plurality of sub-fire-extinguishing units are respectively within the grooves.

8. The battery module as claimed in any preceding claim, further including a third region within the second region, the third region including the first fire-extinguishing material.

9. The battery module as claimed in claim 8, wherein the fire-extinguishing sheet includes a plurality of fire-extinguishing sheets spaced apart from each other, the plurality of fire-extinguishing sheets respectively corresponding to the plurality of battery cells.

10. The battery module as claimed in any preceding claim, wherein the fire-extinguishing sheet is coupled to the cover part.

11. A battery module, comprising:
a plurality of battery cells;
a cover part covering the plurality of battery cells; and
a fire-extinguishing sheet between the plurality of battery cells and the cover part,
wherein the fire-extinguishing sheet includes a first region including a first fire-extinguishing material and a second region including a second fire-extinguishing material, and
a ratio of a weight of the first fire-extinguishing material to a weight of the second fire-extinguishing material is about 4 to about 10.

12. The battery module as claimed in claim 11, wherein the second region is within the first region.

13. The battery module as claimed in claim 12, further including a third region within the second region, the third region including the first fire-extinguishing material.

14. The battery module as claimed in claim 13, wherein the fire-extinguishing sheet includes a plurality of fire-extinguishing sheets spaced apart from each other, the plurality of fire-extinguishing sheets respectively corresponding to the plurality of battery cells.

15. The battery module as claimed in any one of claims 11 to 14, wherein:
the first fire-extinguishing material includes a fire-extinguishing material that is a cooling fire-extinguishing material, and
the second fire-extinguishing material includes a fire-extinguishing material that fire-extinguishes by smothering.
